# FASCICULE DE BREVET EUROPEEN

(11) **EP 1 616 786 B1**
(45) Date de publication et mention de la délivrance du brevet: **13.12.2006**
(21) Numéro de dépôt: 05291224.3
(22) Date de dépôt: 08.06.2005
(51) Int. Cl.: B64D 27/20, B64D 27/26

(54) **Avion multimoteur à puits de descente**
Mehrmotoriges Flugzeug mit Rumpfzugangsschacht für ein Triebwerk
Multiengined airplane with engine access well

(30) Priorité: 15.07.2004 FR 0407864
(43) Date de publication de la demande: 18.01.2006
(73) Titulaire: AIRBUS France, 31060 Toulouse (FR)
(72) Inventeur: Cazals, Olivier, 31700 Daux (FR); Genty de la Sagne, Jaime, 31400 Toulouse (FR); Rittinghaus, Denis, 31000 Toulouse (FR)
(74) Mandataire: Bonnetat, Christian

(56) Documents cités:
- FR-A- 1 047 027
- US-A- 2 815 184
- US-A- 2 944 766
- US-A- 3 041 016
- US-A- 3 194 515
- US-A- 3 666 211

## Description

La présente invention concerne un avion multimoteur du type dans lequel l'un des moteurs est plus particulièrement agencé à la queue du fuselage, qui comporte les empennages arrière, et selon le plan longitudinal vertical de symétrie du fuselage.

Tel est notamment le cas des avions triréacteurs comme le Lockheed L1011 et le McDonnell Douglas DC-10 ou MD-11. En effet, alors que deux des moteurs sont portés respectivement par les ailes, le troisième moteur est situé structurellement et géométriquement entre l'empennage horizontal avec ses deux stabilisateurs symétriques et l'empennage vertical avec sa dérive disposée sur la nacelle ou le carénage de ce troisième moteur. D'autres avions comme montré par exemple dans le document FR-A-1047027 intègrent quant à eux le moteur de queue en bout de fuselage, directement dans sa structure.

Quel que soit le type d'avions équipé d'un tel moteur en queue du fuselage, des problèmes particuliers de maintenance se posent de par l'emplacement dudit moteur comparativement à un moteur d'aile très accessible et facilement démontable. En effet, quand on veut déposer le moteur pour une révision importante, voire pour son remplacement, on doit procéder préalablement au démontage de nombreux éléments et dispositifs environnants indépendants du moteur, pour accéder à ce dernier, ce qui conduit à des interventions particulièrement longues, fastidieuses et coûteuses.

Par ailleurs, il est nécessaire de prévoir des installations de levage et/ou de manutention complexes et lourdes (compte-tenu de la hauteur d'intervention) pour pouvoir effectuer en toute sécurité les différents mouvements (horizontaux et verticaux) pour sortir et déplacer le moteur depuis les empennages arrière ou le fuselage jusqu'à un bâti de réception posé au sol.

La présente invention a pour but de remédier à ces inconvénients.

A cet effet, l'avion multimoteur dont l'un des moteurs est agencé à la queue du fuselage, qui comporte les empennages arrière, et selon le plan longitudinal vertical de symétrie dudit fuselage, est remarquable, selon l'invention, en ce que ledit moteur de queue est disposé devant lesdits empennages arrière, sur la partie supérieure de la queue du fuselage, en ce que ledit moteur de queue est monté, de façon amovible, sur une structure portante rigide associée à celle dudit fuselage et en ce qu'est ménagé, dans la queue dudit fuselage et à l'aplomb dudit moteur porté par ladite structure, un puits de descente vertical pour le passage dudit moteur entre, d'une part, une position haute correspondant à la position opérationnelle dudit moteur et, d'autre part, à la suite de la désolidarisation dudit moteur de la structure portante et du déplacement de celui-ci à travers ledit puits de descente, une position basse pour laquelle ledit moteur est sorti dudit fuselage et se trouve sous ladite queue.

Ainsi, grâce à l'invention, après sa désolidarisation de la structure portante, on peut descendre directement le moteur à travers le puits de descente formant une voie de passage, pour procéder à sa révision ou à son remplacement, sans avoir à effectuer le démontage de nombreux éléments ou dispositifs annexes ni à recourir à des cinématiques à plusieurs mouvements et, donc, à des installations de manutention complexes pour l'amener sur un bâti de réception, puisque seul un mouvement rectiligne vertical est nécessaire, ce qui permet en conséquence de réduire les temps et les coûts d'intervention.

Dans un mode préféré de réalisation, ladite structure portante comporte au moins une poutre à laquelle est suspendu, par l'intermédiaire d'attaches de fixation, ledit moteur, et des arceaux structuraux portant ladite poutre et associés à la structure dudit fuselage. On remarque la conception particulièrement simple mais mécaniquement rigide d'une telle structure dont les arceaux permettent d'amener le moteur de queue au-dessus de la partie supérieure du fuselage. Géométriquement, ladite poutre de la structure portante est disposée sensiblement horizontalement dans ledit plan de symétrie et lesdits arceaux structuraux sont parallèles entre eux et perpendiculaires à ladite poutre qu'ils portent.

Plus particulièrement, lesdits arceaux structuraux alignés présentent une forme de U renversé chevauchant ledit moteur par le dessus, les branches latérales de chaque arceau étant solidaires de la structure du fuselage et sur l'extérieur des sommets arrondis des arceaux en U renversé est rapportée ladite poutre à laquelle est suspendu ledit moteur via les attaches de fixation.

A des fins de sécurité, ladite poutre est de préférence double et comprend deux poutres identiques rapportées l'une contre l'autre. Ainsi, si l'une des poutres cède, l'autre résiste.

Par ailleurs, pour le passage du moteur de queue à travers le puits de descente du fuselage entre ses deux positions, des ouvertures sont prévues, en correspondance, dans les parties respectivement supérieure et inférieure dudit fuselage, à l'aplomb dudit moteur.

De préférence, la partie supérieure de la queue du fuselage, sur laquelle est disposé ledit moteur, présente une configuration aplatie.

Dans un mode préféré de réalisation, les empennages arrière définissent un canal par exemple sensiblement en forme de U, géométriquement symétrique par rapport au plan de symétrie du fuselage, le moteur de queue étant ainsi disposé devant ledit canal en U.

En particulier, ladite ouverture ménagée dans la partie inférieure du fuselage est obturée par une trappe, articulée à la structure dudit fuselage et définissant, lorsqu'elle est abaissée, un escalier d'accès à l'intérieur du fuselage. L'ouverture de la trappe ou son retrait du fuselage si elle est amovible autorise alors la descente (ou la remontée) du moteur de queue via ledit puits.

Le moteur est de plus confiné dans une nacelle rapportée fixement sur la partie supérieure dudit fuselage. Ainsi, l'ouverture supérieure est entourée par la nacelle. Par exemple, ladite nacelle peut comporter un capot avant d'entrée d'air dudit moteur, un capot central amovible disposé autour de la soufflante du moteur, et un capot arrière amovible disposé autour de la turbine, lesdits capots se fixant sur la partie supérieure dudit fuselage et entourant son ouverture supérieure.

Selon une autre caractéristique, un caisson peut être monté dans ledit puits de descente dudit fuselage, à l'emplacement du passage du moteur à travers celui-ci, par exemple à des fins de maintenance directement à bord de l'avion ou à des fins de transport de fret et/ou de bagages.

Les figures du dessin annexé feront bien comprendre comment l'invention peut être réalisée. Sur ces figures, des références identiques désignent des éléments semblables.

La figure 1 est une vue en perspective d'un avion multimoteur selon l'invention, comportant un moteur en queue du fuselage.

La figure 2 est une vue de côté de l'avion représenté sur la figure 1.

La figure 3 représente schématiquement en perspective le montage du moteur de queue sur la structure du fuselage.

Les figures 4 à 6 représentent schématiquement les séquences de descente du moteur de queue à travers le fuselage.

La figure 7 est une vue en perspective arrière de dessous de la queue du fuselage.

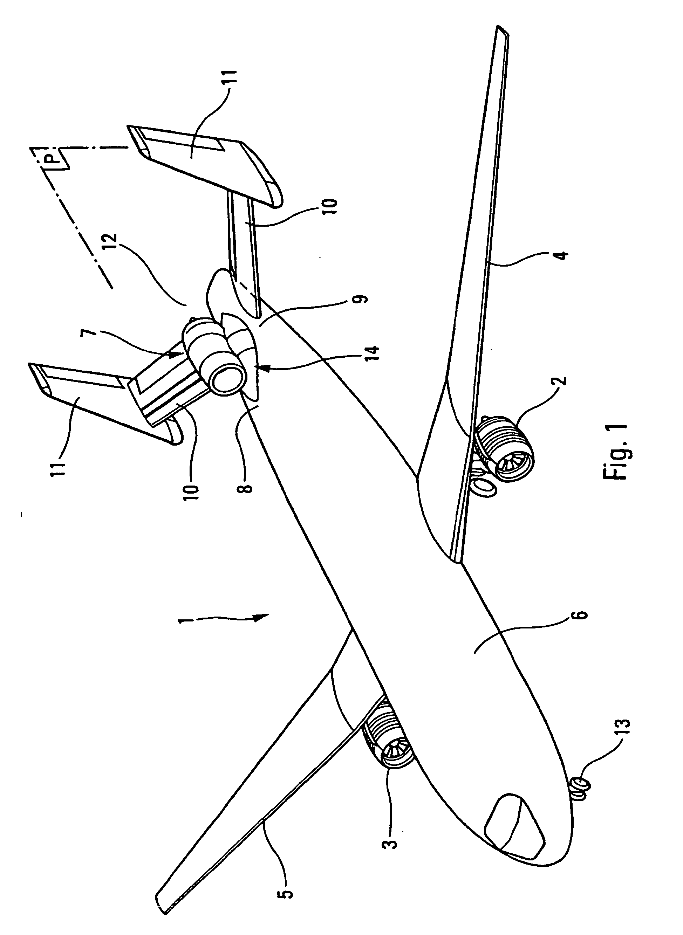

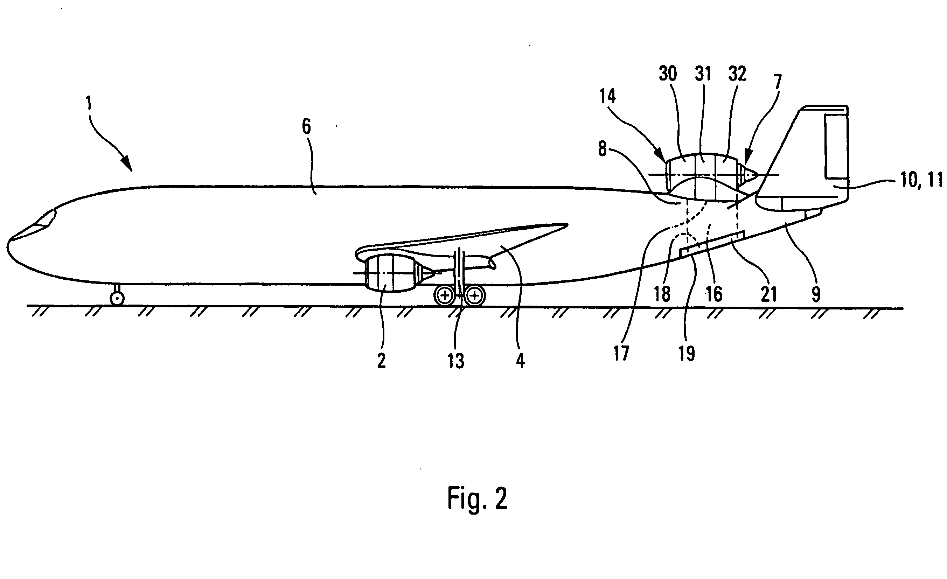

Dans l'exemple de réalisation représenté sur les figures 1 et 2, l'avion 1 comprend trois moteurs du type turboréacteur. Deux des moteurs, référencés 2 et 3, sont disposés sous les ailes 4, 5 du fuselage 6 respectivement symétriquement par rapport au plan longitudinal vertical de symétrie P de ce dernier et le troisième moteur 7 est prévu dans ce plan de symétrie P et au niveau de la queue 9 du fuselage, laquelle comporte les empennages arrière horizontal 10 et vertical 11. La référence 13 désigne le train d'atterrissage de l'avion.

Le moteur de queue 7 est avantageusement situé sur la partie supérieure 8 de la queue 9 et devant les empennages horizontal et vertical qui définissent alors un canal 1 2 sensiblement en forme de U dans cet exemple, géométriquement symétrique par rapport au plan longitudinal P du fuselage (les empennages arrière définissant le canal pourraient également formés un H ou un V). Ainsi, comme la sortie du moteur 7 se trouve à l'entrée du canal en U des empennages 10, 11, dans le plan de symétrie, les gaz émis se dirigent vers l'intérieur du canal, sans nuire aux empennages.

On voit par ailleurs sur ces figures 1 et 2, que le moteur 7 est entouré d'une nacelle ou carénage 14 rapporté sur le fuselage et est surélevé par rapport à la partie supérieure 8 de la queue 9 du fuselage, laquelle partie est aplatie.

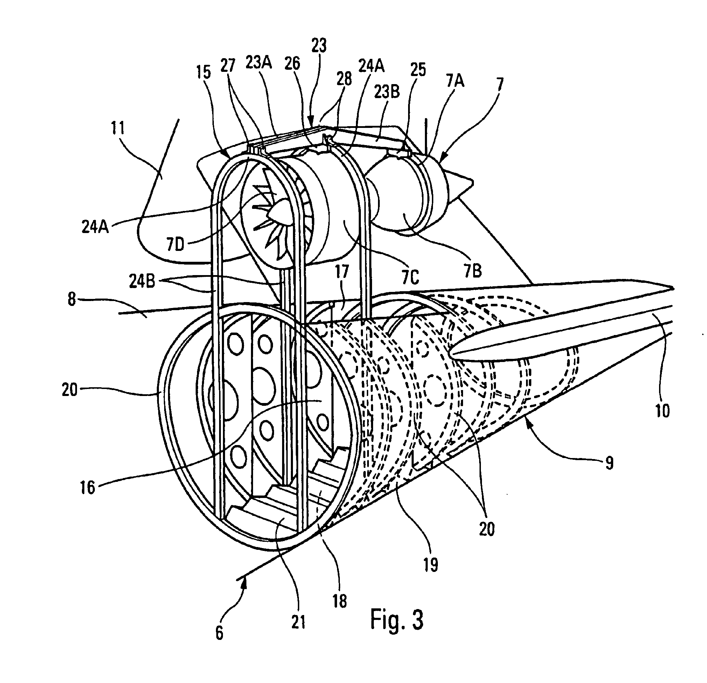

Comme le montre plus particulièrement la figure 3 sur laquelle la nacelle 14 n'a pas été représentée, le moteur 7 est monté, de façon amovible, sur une structure portante rigide 15 associée à celle du fuselage qui est définie entre autres par des cadres structuraux 20. Un puits de descente vertical 16 est alors ménagé dans la queue 9 du fuselage, à l'aplomb du moteur 7 et selon le plan de symétrie, pour permettre son passage entre sa position haute, pour laquelle il est opérationnel et solidaire de la structure portante 15, et une position basse, pour laquelle il est sorti du fuselage à travers le puits 16 à des fins de maintenance ou de remplacement.

Pour assurer librement le passage du moteur 7 dans le puits de descente 16, des aménagements sont prévus au niveau de la structure de la queue 9 du fuselage. Des ouvertures 17 et 18 sont pratiquées en correspondance l'une de l'autre dans la partie supérieure 8 et dans la partie inférieure 19 de la queue 9 du fuselage, en étant situées à l'aplomb dudit moteur 7. Ces ouvertures 17, 18 présentent une forme sensiblement rectangulaire en plan et ont une dimension supérieure à celle du moteur pour son passage. Les cadres structuraux 20 du fuselage, au niveau du puits 16, sont alors partiels et renforcés pour ne pas nuire à la rigidité du fuselage.

On voit sur les figures 1 à 3, que l'ouverture inférieure 18 est obturée par une trappe 21 articulée à la structure du fuselage 6, en suivant son profil et qui est, dans cet exemple, amovible. La trappe 21 peut être alors retirée du fuselage lorsque l'on souhaite procéder à la descente dudit moteur, comme on le verra plus tard, ou simplement abaissée en découvrant un escalier 22, lorsque l'on souhaite accéder à l'intérieur du fuselage. Dans une variante non représentée, la trappe pourrait être réalisée en deux parties symétriques (portes ou volets) par rapport au plan longitudinal du fuselage, sans escalier. Les deux parties sont articulées latéralement sur le fuselage, à la manière de certaines trappes de train d'atterrissage, et ne sont pas amovibles. Quant à l'ouverture supérieure 17, elle peut être laissée telle quelle puisqu'elle est entourée par une partie basse de la nacelle 14, qui est rapportée fixement sur la partie supérieure aplatie 8 du fuselage. Elle pourrait être également obturée.

Dans le mode de réalisation schématique illustré sur la figure 3, la structure portante 15 comprend une double poutre 23 supportant le moteur 7 et deux arceaux structuraux 24 supportant la double poutre (la structure pourrait être également du type caissonné ou en treillis). En particulier, la double poutre 23 est agencée horizontalement dans le plan de symétrie P et se compose de deux poutres identiques 23A, 23B sensiblement rectilignes, disposées l'une contre l'autre. A cette double poutre 23 est suspendu le moteur 7 par des attaches de fixation 25, 26 dont l'une 25 est prévue à l'extrémité arrière de la double poutre (à droite sur la figure 3) et porte le carter externe 7A de la turbine 7B du moteur et dont l'autre 26 est située en partie médiane de la double poutre et porte le carter externe 7C de la soufflante 7D.

En ce qui concerne les arceaux structuraux 24, ils sont identiques et présentent une forme de U renversé, en étant disposés dans des plans perpendiculaires au plan de symétrie P du fuselage. Sur les sommets arrondis 24A des arceaux est rapportée la double poutre 23 par l'intermédiaire d'attaches de fixation dont l'une 27 est prévue à l'extrémité avant de la double poutre (à gauche sur la figure 3) et dont l'autre 28 est située en partie médiane ou centrale de celle-ci, à côté de l'attache moteur 26. A des fins de sécurité, les attaches de fixation 25, 26, 27 et 28 sont doublées de la même manière que la poutre.

Les arceaux en U renversé enjambent le moteur 7 et leurs branches latérales 24B sont rapportées fixement aux cadres structuraux 20 du fuselage. Ainsi, les arceaux participent à la rigidification de la structure du fuselage et la longueur des branches permet d'amener facilement le moteur au-dessus de la partie supérieure 8 du fuselage.

En outre, comme le montrent les figures 1, 2 et 4, la nacelle 14 entourant la structure portante 15 et le moteur 7 se compose principalement de trois parties ou capots successifs :
- un premier capot avant d'entrée d'air 30, situé devant la soufflante 7D et rapporté fixement sur la partie supérieure aplatie du fuselage ;
- un capot central 31 à deux volets articulés, entourant le carter externe 7C de la soufflante et du compresseur correspondant, et rapporté fixement sur ladite partie aplatie de la queue du fuselage ; et
- un capot arrière 32 également à deux volets articulés, entourant le carter externe 7A de la turbine et rapporté fixement sur ladite partie aplatie 8, en regard des empennages arrière 10 et 11.

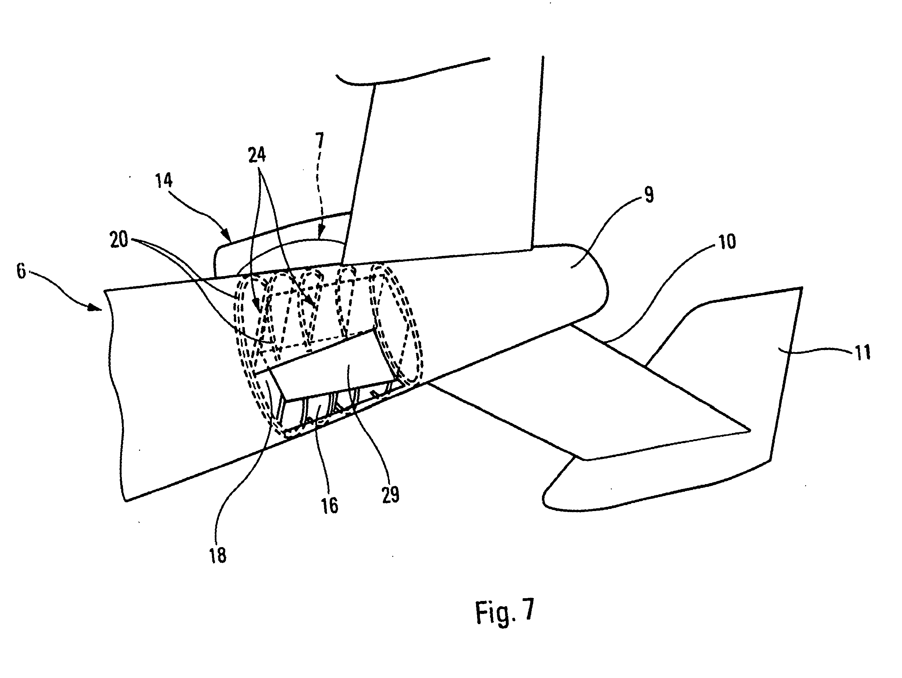

Par ailleurs, à l'emplacement du puits de descente 16 peut être installé un caisson 29 comme le montre la figure 7, accessible par exemple depuis l'escalier 22 intégré à la trappe 21, alors abaissée. Ce caisson 29 peut recevoir des techniciens leur permettant d'effectuer notamment des opérations de maintenance dans le fuselage, par exemple, sur les circuits longeant ce dernier, ainsi que sur le moteur de queue, ou peut contenir du fret ou des bagages.

Quand il est nécessaire de déposer le moteur de queue 7, on procède schématiquement de la manière suivante.

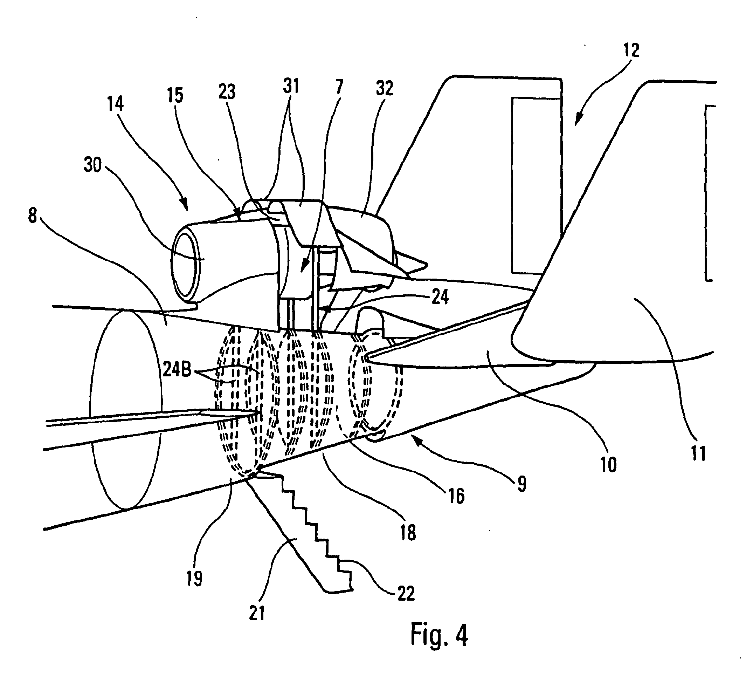

L'avion 1 étant amené sur une aire adéquate, la trappe inférieure 21 est abaissée et les volets amovibles constituant les capots central 31 et arrière 32 qui entourent le moteur 7, sont soulevés comme le montre la figure 4. On pourrait autrement démonter lesdits capots si nécessaire.

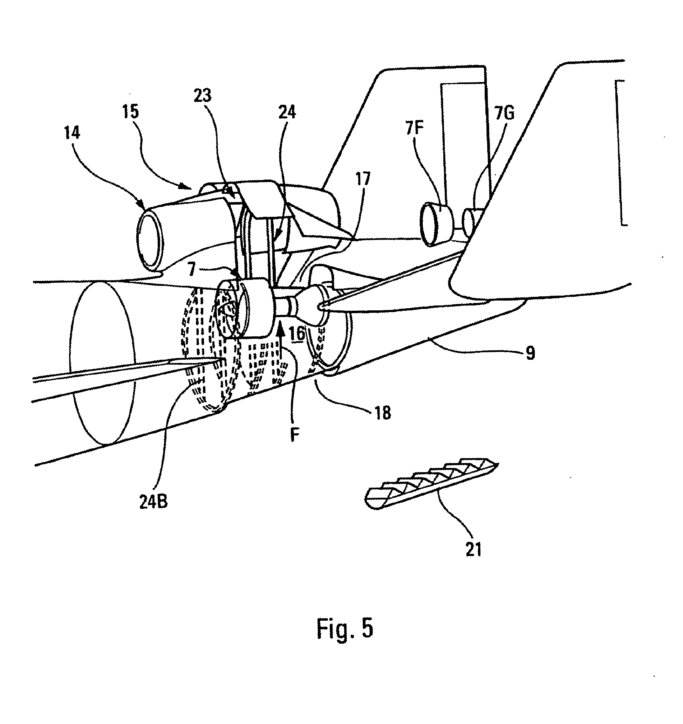

Puis la couronne externe 7F et le cône interne 7G de la tuyère sont démontés du reste du moteur, comme le montre la figure 5. Ce démontage, qui s'effectue sans problème particulier, évite de prévoir des ouvertures de passage et un puits trop grands dans la queue du fuselage. La trappe 21 est par ailleurs retirée du fuselage 6, découvrant totalement le puits de descente 16. Si le caisson 29 est présent dans celui-ci, il y est bien entendu retiré.

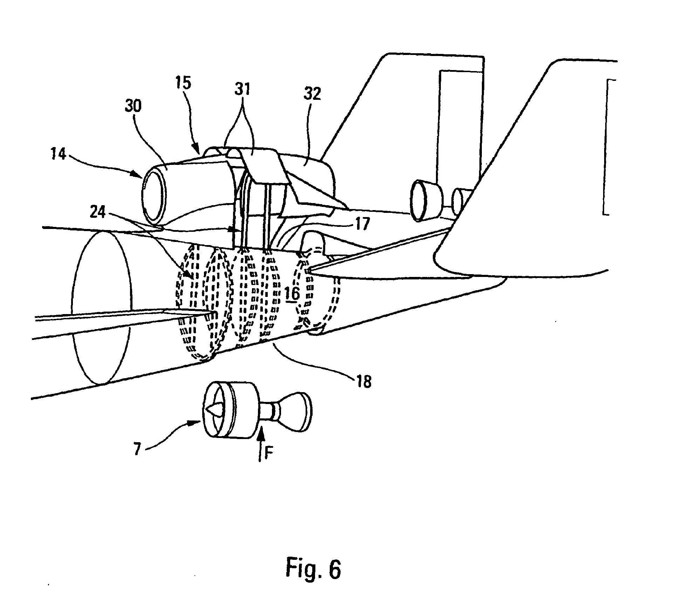

Avant le démontage des attaches de fixation 25, 26 solidarisant le moteur 7 de la double poutre 23, les circuits fluidiques et autres équipements raccordés au moteur sont déconnectés et un équipement de manutention est amené pour descendre le moteur. Celui-ci peut être sous la forme, schématisée par une flèche F sur les figures 5 et 6, d'un engin de levage motorisé équipé de moyens extensibles (vérin, en X) à l'extrémité desquels se trouve une structure à berceaux apte à supporter le moteur. L'équipement de manutention pourrait être également un système à palans surplombant la queue du fuselage et permettant, par un simple déplacement vertical, la descente (ou la montée) du moteur de queue à travers le puits.

En variante, la double poutre 23 pourrait supporter les palans permettant d'obtenir une autonomie complète pour le montage/démontage du moteur. Ainsi, il n'est plus nécessaire d'amener l'avion dans un hall adéquat, mais une simple aire à ciel ouvert par exemple suffit avantageusement.

Sur la figure 5, le moteur est en cours de descente par l'intermédiaire de l'équipement de manutention et traverse les ouvertures 17, 18 et le puits 16, jusqu'à sa sortie de la queue 9 du fuselage 6, comme le montre la figure 6. De là, il peut être amené dans des ateliers spécialisés. On comprend donc, par la description précédente de l'invention, que la maintenance d'un tel moteur de queue situé en partie supérieure du fuselage, est rendue particulièrement aisée à l'instar d'un moteur d'aile.

## Revendications

1. Avion multimoteur dont l'un (7) des moteurs est agencé à la queue (9) du fuselage (6), qui comporte les empennages arrière, et selon le plan longitudinal vertical de symétrie dudit fuselage,
ledit moteur de queue (7) étant disposé devant lesdits empennages arrière, sur la partie supérieure (8) de la queue du fuselage, ledit moteur de queue (7) étant monté, de façon amovible, sur une structure portante rigide (15) associée à celle dudit fuselage, **caractérisé en ce qu**'est ménagé, dans la queue (9) dudit fuselage et à l'aplomb dudit moteur (7) porté par ladite structure (15), un puits de descente vertical (16) pour le passage dudit moteur entre, d'une part, une position haute correspondant à la position opérationnelle dudit moteur et, d'autre part, à la suite de la désolidarisation dudit moteur de la structure portante et du déplacement de celui-ci à travers ledit puits de descente, une position basse pour laquelle ledit moteur est sorti dudit fuselage (6) et se trouve sous ladite queue.

2. Avion selon la revendication 1,
**caractérisé en ce que** ladite structure portante (15) comporte au moins une poutre (23) à laquelle est suspendu, par l'intermédiaire d'attaches de fixation, ledit moteur (7), et des arceaux structuraux (24) portant ladite poutre (23) et associés à la structure dudit fuselage.

3. Avion selon la revendication 2,
**caractérisé en ce que** ladite poutre (23) de la structure portante (15) est disposée sensiblement horizontalement dans ledit plan de symétrie et lesdits arceaux structuraux (24) sont parallèles entre eux et perpendiculaires à ladite poutre qu'ils portent.

4. Avion selon la revendication 3,
**caractérisé en ce que** lesdits arceaux structuraux (24) alignés présentent une forme de U renversé chevauchant ledit moteur (7) par le dessus, les branches latérales (24B) de chaque arceau étant solidaires de la structure du fuselage et sur l'extérieur des sommets arrondis (24A) des arceaux en U renversé est rapportée ladite poutre (23) à laquelle est suspendu ledit moteur via les attaches de fixation.

5. Avion selon l'une des revendications 2 à 4,
**caractérisé en ce que** ladite poutre (23) est double et comprend deux poutres identiques (23A, 23B) rapportées l'une contre l'autre.

6. Avion selon l'une quelconque des revendications 1 à 5,
**caractérisé en ce que**, pour le passage du moteur de queue à travers le puits de descente (16) du fuselage entre ses deux positions, des ouvertures (17, 18) sont prévues, en correspondance, dans les parties respectivement supérieure (8) et inférieure (19) dudit fuselage.

7. Avion selon la revendication 6,
**caractérisé en ce que** ladite ouverture (18) ménagée dans la partie inférieure (19) du fuselage est obturée par une trappe (21), articulée à la structure dudit fuselage et définissant, lorsqu'elle est abaissée, un escalier d'accès à l'intérieur du fuselage.

8. Avion selon l'une quelconque des revendications 1 à 7,
**caractérisé en ce que** la partie supérieure (8) de la queue du fuselage, sur laquelle est prévu ledit moteur (7), présente une configuration aplatie.

9. Avion selon l'une quelconque des revendications 1 à 8,
**caractérisé en ce que** lesdits empennages arrière (10, 11) définissent un canal (12), géométriquement symétrique par rapport au plan de symétrie du fuselage.

10. Avion selon l'une quelconque des revendications 1 à 9,
**caractérisé en ce que** ledit moteur est entouré par une nacelle (14) rapportée fixement sur la partie supérieure (8) dudit fuselage (6).

11. Avion selon la revendication 10,
**caractérisé en ce que** ladite nacelle (14) comporte un capot avant (30) d'entrée d'air dudit moteur, un capot central amovible (31) disposé autour de la soufflante du moteur, et un capot arrière amovible (32) disposé autour de la turbine, lesdits capots se fixant sur la partie supérieure dudit fuselage et entourant son ouverture supérieure.

12. Avion selon l'une quelconque des revendications 1 à 11,
**caractérisé en ce qu**'un caisson (29) est monté dans ledit puits de descente (16) dudit fuselage, à l'emplacement du passage du moteur à travers celui-ci.

## Claims

1. A multi-engined aircraft of which one (7) of the engines is positioned at the tail (9) of the fuselage (6), which comprises the rear tail units, and in the vertical longitudinal plane of symmetry of said fuselage, said tail engine (7) being disposed in front of said rear tail units, on the upper part (8) of the tail of the fuselage, and said tail engine (7) being mounted, in a detachable manner, on a rigid supporting structure (15) attached to that of said fuselage,
**characterized in that** there is formed, in the tail (9) of said fuselage and plumb with said engine (7) supported by said structure (15), a vertical lowering shaft (16) for the passage of said engine between, on the one hand, a high position corresponding to the operational position of said engine and, on the other hand, following the separation of said engine from the supporting structure and its displacement through said lowering shaft, a low position in which said engine has come out of said fuselage (6) and is under said tail.

2. The aircraft as claimed in claim 1,
**characterized in that** said supporting structure (15) comprises at least one beam (23) from which said engine (7) is suspended by means of fixing attachments and structural arches (24) supporting said beam (23) and attached to the structure of said fuselage.

3. The aircraft as claimed in claim 2,
**characterized in that** said beam (23) of the supporting structure (15) is disposed substantially horizontally in said plane of symmetry and said structural arches (24) are parallel with each other and perpendicular to said beam which they support.

4. The aircraft as claimed in claim 3,
**characterized in that** said aligned structural arches (24) have the shape of an inverted U passing over the top of said engine (7), the side members (24B) of each arch being integral with the structure of the fuselage and said beam (23) from which said engine is suspended via the fixing attachments is attached to the outside of the rounded tops (24A) of the inverted U-shaped arches.

5. The aircraft as claimed in anyone of claims 2 to 4,
**characterized in that** said beam (23) is double and comprises two identical beams (23A, 23B) fitted one against the other.

6. The aircraft as claimed in anyone of claims 1 to 5,
**characterized in that** for the passage of the tail engine between its two positions through the lowering shaft (16) of the fuselage, corresponding openings (17, 18) are provided in the upper (8) and lower (19) parts respectively of said fuselage.

7. The aircraft as claimed in claim 6,
**characterized in that** said opening (18) formed in the lower part (19) of the fuselage is obturated by a hatch (21), articulated on the structure of said fuselage and defining, when it is lowered, an access stairway to the inside of the fuselage.

8. The aircraft as claimed in anyone of claims 1 to 7,
**characterized in that** the upper part (8) of the tail of the fuselage, upon which said engine (7) is placed, has a flattened configuration.

9. The aircraft as claimed in anyone of claims 1 to 8,
**characterized in that** said rear tail units (10, 11) define a channel (12) that is geometrically symmetrical with respect to the plane of symmetry of the fuselage.

10. The aircraft as claimed in anyone of claims 1 to 9,
**characterized in that** said engine is surrounded by a nacelle (14) attached in a fixed manner to the upper part (8) of said fuselage (6).

11. The aircraft as claimed in claim 10,
**characterized in that** said nacelle (14) comprises a forward air-intake cowl (30) for said engine, a detachable central cowl (31) disposed around the fan of the engine, and a detachable rear cowl (32) disposed around the turbine, said cowls being fixed to the upper part of said fuselage and surrounding its upper opening.

12. The aircraft as claimed in anyone of claims 1 to 11,
**characterized in that** a box-type structure (29) is fitted in said lowering shaft (16) of said fuselage, at the place where the engine passes through the latter.

## Patentansprüche

1. Mehrmotoriges Flugzeug, bei dem ein Motor (7) am Heck (9) des Rumpfes (6), welcher die hinteren Leitwerke aufweist, und längs der vertikalen Symmetrieebene in Längsrichtung des Rumpfes angeordnet ist, wobei
sich der Heckmotor (7) vor den hinteren Leitwerken auf dem oberen Bereich (8) des Rumpfhecks befindet, wobei der Heckmotor (7) in beweglicher Weise auf einer festen Tragekonstruktion (15) montiert ist die mit dem Rumpf verbunden ist, **dadurch gekennzeichnet, dass** im Heck (9) des Rumpfes und senkrecht zu dem von der Konstruktion (15) getragenen Motor (7), ein vertikaler Absenkschacht (16) ausgebildet ist, für den Durchgang des Motors zwischen, einerseits, einer hochliegenden Position, welche der Betriebsstellung des Motors entspricht, und andererseits, in Folge der Abkopplung des Motors von der Tragekonstruktion und dessen Verlagerung durch den Absenkschacht hindurch, einer tiefliegenden Position, in welcher der Motor aus dem Rumpf (6) herausgelassen ist und sich unter dem Heck befindet.

2. Flugzeug gemäß Anspruches 1,
**dadurch gekennzeichnet, dass** die Tragekonstruktion (15) mindestens einen Balken (23) aufweist, an dem mittels Halterungen der Motor (7) und die bogenförmigen Träger (24) aufgehängt sind, die den Balken (23) tragen und mit der Konstruktion des Rumpfes verbunden sind.

3. Flugzeug gemäß Anspruches 2,
**dadurch gekennzeichnet, dass** der Balken (23) der Tragekonstruktion (15) im Wesentlichen horizontal in der Symmetrieebene angebracht ist und die bogenförmigen Träger (24) parallel zueinander und senkrecht zu dem Balken, den sie tragen, verlaufen.

4. Flugzeug gemäß Anspruches 3,
**dadurch gekennzeichnet, dass** die ausgerichteten bogenförmigen Träger (24) eine umgedrehte U-Form bilden, welche von oben auf dem Motor (7) sitzt, wobei die seitlichen Schenkel (24B) jedes Bogens fest mit der Rumpfstruktur verbunden sind und auf der Außenseite der abgerundeten Kuppen (24) der umgedreht U-förmigen Bögen der Balken (23) angebracht ist, an dem der Motor mittels Halterungen aufgehängt ist.

5. Flugzeug gemäß einem der Ansprüche 2 bis 4,
**dadurch gekennzeichnet, dass** der Balken (23) doppelt vorliegt und zwei identische Balken (23A, 23B) umfasst, die aneinander angebracht sind.

6. Flugzeug gemäß einem der Ansprüche 1 bis 5,
**dadurch gekennzeichnet, dass** für den Durchgang des Heckmotors durch den Absenkschacht (16) des Rumpfes zwischen seinen zwei Positionen im jeweils oberen (8) und unteren (19) Bereich des Rumpfes korrespondierende Öffnungen (17, 18) vorgesehen sind.

7. Flugzeug gemäß Anspruch 6,
**dadurch gekennzeichnet, dass** die Öffnung (18), die im unteren Teil (19) des Rumpfes vorgesehen ist, durch eine Klappe (21) verschlossen ist, die an der Konstruktion des Rumpfes angelenkt ist und, wenn sie herabgelassen ist, eine Zugangstreppe zum Inneren des Rumpfes darstellt.

8. Flugzeug gemäß einem der Ansprüche 1 bis 7,
**dadurch gekennzeichnet, dass** der obere Bereich (8) des Rumpfhecks, auf welchem der Motor (7) vorgesehen ist, eine abgeflachte Form hat.

9. Flugzeug gemäß einem der Ansprüche 1 bis 8,
**dadurch gekennzeichnet, dass** die hinteren Leitwerke (10, 11) einen Kanal (12) bilden, der geometrisch symmetrisch in Bezug zu der Symmetrieebene des Rumpfes ist.

10. Flugzeug gemäß einem der Ansprüche 1 bis 9,
**dadurch gekennzeichnet, dass** der Motor von einer Gondel (14) umgeben ist, welche fest auf dem oberen Bereich (8) des Rumpfes (6) angebracht ist.

11. Flugzeug gemäß Anspruch 10,
**dadurch gekennzeichnet, dass** die Gondel (14) aufweist eine vordere Abdeckung (30) für den Lufteinlass des Motors, eine bewegliche zentrale Abdeckung um das Gebläse des Motors herum und eine hintere bewegliche Abdeckung um die Turbine herum beinhaltet, wobei die Abdeckungen am oberen Bereich des Rumpfes befestigt sind und dessen obere Öffnung umgeben.

12. Flugzeug gemäß einem der Ansprüche 1 bis 11,
**dadurch gekennzeichnet, dass** ein Kasten (29) in dem Absenkschacht (16) des Rumpfes an der Durchgangsstelle des Motors montiert ist.
